# EUROPÄISCHE PATENTANMELDUNG

(11) **EP 1 617 195 A2**
(43) Veröffentlichungstag der Anmeldung: **18.01.2006**
(21) Anmeldenummer: 05013318.0
(22) Anmeldetag: 21.06.2005
(51) Int. Cl.: G01K 1/12

(54) **Führungseinrichtung für Signalleitungen, Vorrichtung zum Messen von Temperaturen und/oder Konzentrationen sowie Verwendung**

(30) Priorität: 15.07.2004 GB 0415849
(71) Anmelder: Heraeus Electro-Nite International N.V., 3530 Houthalen (BE)
(72) Erfinder: Whitaker, Robert Charles, Chesterfield Derbyshire (GB); Butler, Andrew David, Edwinstowe Mansfield Nottinghamshire (GB)
(74) Vertreter: Kühn, Hans-Christian

(57) **Zusammenfassung**

Die Erfindung betrifft eine Führungseinrichtung für Signalleitungen mit einem Führungsrohr, durch das die Signalleitungen geführt sind, mit einer das Führungsrohr seitlich umgebenden Kühleinrichtung mit mindestens einem Raum für ein Kühlmedium und mit mindestens einem Zulauf und mindestens einem Ablauf für das Kühlmedium, wobei der Raum für das Kühlmedium rohrförmig ausgebildet und an mindestens einer Stirnseite mit einem Verschluß gasdicht verschlossen ist.

## Beschreibung

Die Patentanmeldung betrifft eine Führungseinnchtung für Signalleitungen, eine diese Führungseinrichtungen enthaltende Vorrichtung zum Messen von Temperaturen und/oder Konzentrationen sowie die entsprechende Verwendung.

Derartige Einrichtungen sind beispielsweise aus JP 09-280960 bekannt. Hier ist ein Führungsrohr für eine optische Faser offenbart, mit der Messungen in Metallschmelzen durchgeführt werden sollen. Die optische Faser wird dabei luftgekühlt. Aus US 5,853,656 ist eine Trägeranordnung für einen Stahlofen bekannt, bei den Teile der Anordnung mit Luft bzw. Wasser gekühlt werden.

Führungseinrichtungen für Signalleitungen, insbesondere, wenn sie in heißen order aggressiven Umgebungen eingesetzt werden, beispielsweise in Metallschmelzen wie Eisen- Gusseisen- oder Stahlschmelzen, müssen effektiv gekühlt werden, um die Aufnahme und Weiterleitung von Signalen, beispielsweise von Messsignalen nicht zu behindern.

Das vorstehende Problem wird durch den Gegenstand der unabhängigen Ansprüche erfindungsgemäß gelöst. Bevorzugte Ausgestaltungen sind in Unteransprüchen angegeben. Eine Führungseinrichtung mit Signalleitungen mit einem Führungsrohr, durch das die Signalleitungen geführt sind, einer das Führungsrohr seitlich umgebenden Kühleinrichtung mit mindestens einem Raum für ein Kühlmedium und mit mindestens einem Zulauf und mindestens einem Ablauf für das Kühlmedium, wobei der Raum für das Kühlmedium rohrförmig ausgebildet und an mindestens einer Stirnseite mit einem Verschluss gasdicht verschlossen ist, ist zur Führung des Kühlmediums besonders geeignet Insbesondere kann das Führungsrohr durch den Verschluss der Stirnseite hindurchgeführt werden oder es kann in dem Verschluss oder in dem Raum für das Kühlmedium enden, wobei die Signalleitungen durch den Verschluss hindurch geführt sind.

Weiterhin ist es vorteilhaft, dass in dem rohrförmigen Raum ein weiteres, vorzugsweise als Stahlrohr ausgebildete Rohr um das Führungsrohr herum angeordnet ist, wobei der Zulauf (oder der Ablauf) in dem weiteren Rohr und der Ablauf (oder der Zulauf) in der Wand des rohrförmigen Raums angeordnet ist. Dabei ist es insbesondere zweckmäßig, dass das dem einen verschlossenen Ende des rohrförmigen Raums zugewandte Ende des weiteren (zusätzlichen) Rohrs mindestens eine Öffnung aufweist. Vorteilhaft ist es auch, dass das weitere Rohr an seinem Mantel mindestes eine Öffnung aufweist. Vorteilhaftervveise weist es mehrere Öffnungen auf, die vorzugsweise gleichmäßig in Umfangsrichtung und/oder in Längsrichtung des weiteren Rohres verteilt sind. Durch dieses weitere (zusätzliche) Rohr kann eine zielgerichtete Führung des Kühlmediums optimal eingestellt werden.

Zweckmäßig ist es, dass in dem Raum für das Kühlmedium ein Gemisch aus Luft und Wasser und/oder Wasserdampf angeordnet ist. Ein solches Kühlmedium weist eine sehr hohe Effizienz bei der Kühlung auf. Zweckmäßig ist es weiterhin, dass die Signalleitungen als elektrische Leitungen oder als optische Fasern ausgebildet sind.

Erfindungsgemäß ist eine Vorrichtung zum Messen von Temperatur und/oder Konzentrationen, insbesondere von Metallschmelzen, die ein Messende aufweist, dadurch gekennzeichnet, dass an dem Messende der Vorrichtung eine zuvor beschriebene Führungseinrichtung angeordnet ist. Diese Vorrichtung ist vorzugsweise derart ausgebildet, dass an dem Messende oder dem verschlossenen Ende der Führungseinrichtung ein Thermoelement, eine elektrochemische Messzelle und/oder ein Ende einer optischen Faser angeordnet ist.

Die Vorrichtung kann erfindungsgemäß zur Messung von Temperaturen und/oder in Metallschmelzen, insbesondere in Eisen-, Gusseisen- oder Stahlschmelzen verwendet werden. Zweckmäßig ist eine Verwendung als Eintauchsensor.

Erfindungsgemäß ist es, dass in einer vorstehend beschriebenen Führungseinrichtung Wasserdampf und/oder ein Gemisch aus Luft und Wasser als Kühlmittel verwendet wird.

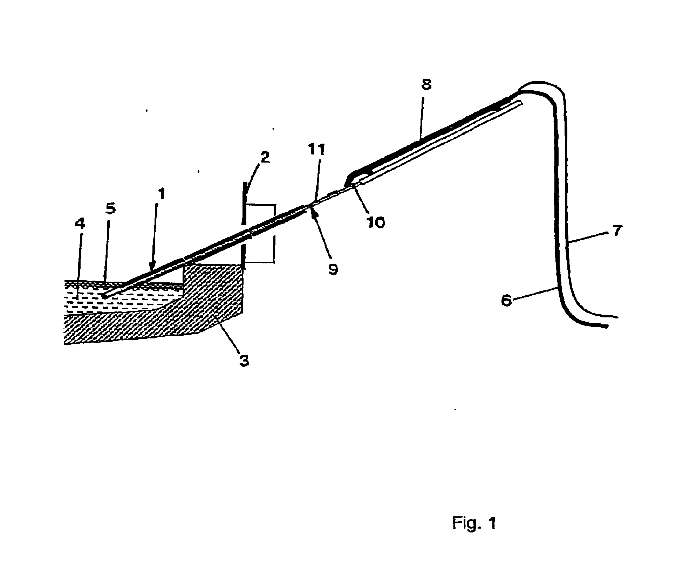

Nachstehend wird ein Ausführungsbeispiel der Erfindung an Hand einer Zeichnung erläutert. In der Zeichnung zeigt
- Fig. 1: eine Vorrichtung zum Messen in Stahlschmelzen sowie deren Anordnung während der Messung,
- Fig. 2: den Schnitt durch eine Führungseinrichtung,
- Fig. 3: eine Einzelheit der Führungseinrichtung mit dem das Führungsrohr umgebenden Rohr.

Der Eintauchsensor 1 ist durch eine seitliche Abschirmung 2 des Schmelzbehälters 3 hindurch mit seinem Eintauchende in eine Stahischmeize 4 eingetaucht. Am Eintauchende weist der Eintauchsensor 1 eine äußere Schutzhülle aus einem Gemisch aus Aluminiumoxid und Graphit auf. Oberhalb der Stahlschmelze 4 befindet sich Schlacke 5. Durch eine Luftzuleitung 6 und eine Wasserzuleitung 7 werden die Komponenten des Kühlmittels in ein Zulieferungsrohr 8 eingeleitet, durch welches das Gemisch aus Luft und Wasser bzw. Wasserdampf durch einen in der äußeren, den Raum für das Kühlmedium begrenzenden Wand der Führungseinrichtung 9 angeordneten Zulauf 10 der Führungseinrichtung 9 zugeführt wird. Das verbrauchte Kühlmittel kann durch den Ablauf 11 aus der Führungseinrichtung 9 austreten.

Aus Gründen der Übersichtlichkeit ist in der Zeichnung die durch die Führungseinrichtung hindurch geführte Signalleitung sowie deren Weiterführung aus den der Schmelze angewandten Ende der Führungseinrichtung heraus zu einem Messgerät nicht dargestellt. Derartige Anordnungen sind jedoch aus dem Stand der Technik allgemein bekannt und dem Fachmann geläufig.

Als Signalleitung dient eine optische Faser. Der Eintauchsensor ist insgesamt mehr als 3 Meter lang. Die Luft wird mit einem Druck von 4 bar der Vorrichtung zugeführt, wobei 2,000 Liter pro Minute durch die Vorrichtung fließen. Die Wassermenge kann in Abhängigkeit von der konkreten Anwendung variiert werden, der Durchfluss an Wasser beträgt etwa 1 Liter pro Minute. Das Wasser wird mittels einer Venturipumpe (oder einer anderen, beispielsweise einer elektrischen Pumpe) durch den Luftstrom in das System eingesaugt, so dass bei Ausfall des Luftstromes kein Wasser in die Vorrichtung gelangen kann. Bei dem Vorgang wird das Wasser in kleinste Tröpfchen zerteilt, so dass Wasserdampf innerhalb der Vorrichtung entsteht. Bei Messungen in Stahlschmelzen (bei Temperaturen von etwa 1.500 bis über 1.700°C) kann die Temperatur im Inneren des Sensors bei etwa 300°C (gemessen 1 Minute nach dem Eintauchen) gehalten werden, alleine durch den Luftstrom. Sobald das Wasser zugeschaltet wird, wurde eine Temperatur von etwa 130°C im Inneren des Eintauchsensors erzielt. Diese Temperatur konnte während der gesamten Eintauschzeit von etwa 13 Minuten gehalten werden. Durch Veränderung der Durchflussmengen kann die Temperatur im Inneren des Sensors geregelt werden. Es ist jedoch nicht sinnvoll, diese Temperatur unter 100°C zu senken, weil bei Temperaturen unter 100°C die Gefahr der Bildung von freiem Wasser besteht

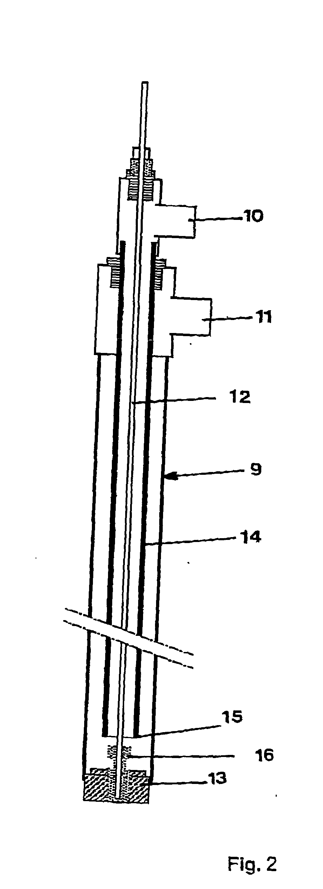

Figur 2 zeigt eine Führungseinrichtung im Detail. Die Führungseinrichtung kann insgesamt mehr als 3 Meter lang sein, wobei selbst der Zulauf 10 oder der Ablauf 11 mehr als 3 Meter von dem Eintauchende entfernt sein können. Zentrisch durch die Führungseinrichtung hindurchgeführt ist ein Führungsrohr 12 aus rostfreiem Stahl. In diesem Führungsrohr 12 ist eine optisch Faser angeordnet (in der Zeichnung nicht dargestellt). Das Führungsrohr 12 endet innerhalb des die Führungseinrichtung am Eintauchende verschleißenden Stopfens 13 aus feuerfestem Material. Die optische Faser wird zweckmäßigerweise durch eine möglichst keine Öffnung innerhalb des Stopfens 13 hindurchgeführt, so dass sie direkten Kontakt mit der Stahlschmelze hat und Strahlung nach dem Prinzip des schwarzen Strahlers aus der Metallschmelze aufnehmen und einer Mess- und Auswerteeinrichtung zuführen kann.

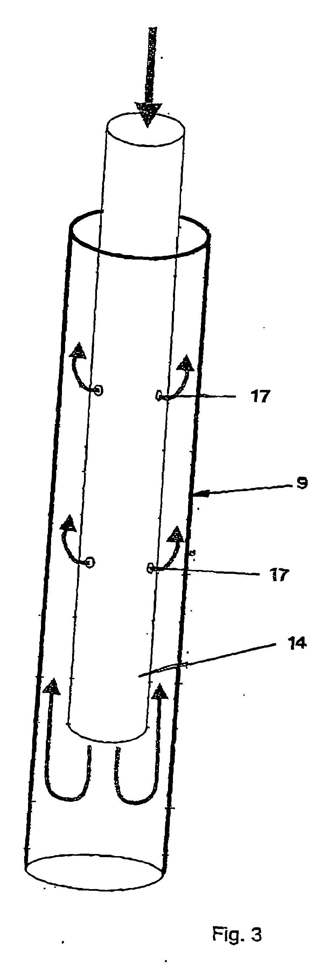

Nach der Einleitung des Kühlmittels durch den Zulauf 10 hindurch in die Führungseinrichtung 9 wird dieses relativ eng um das Führungsrohr 12 herum durch ein weiteres, das Führungsrohr 12 koaxial umgebendes Rohr 14 geleitet. Dieses Rohr 14 kann ebenfalls aus Edelstahl gebildet sein. Es endet oberhalb des Stopfens 13, so dass das Kühlmittel aus der unteren Öffnung 15 des Rohres 14 austreten und innerhalb der Führungseinrichtung 9 zu dem Ablauf 11 und durch diesen aus der Führungseinrichtung 9 hinausgeführt wird. Das Rohr 14 weist mehrere Öffnungen 17 auf (Fig. 3), die gleichmäßig in Umfangsrichtung und in Längsrichtung des Rohres 14 verteilt sind. Dadurch kann effektiver gekühlt werden. Der Durchmesser und Zahl der Öffnungen 17 hängt ab von der Länge der heißen Zone, das heißt, von der Eintauchtiefe in die Stahlschmelze 4 und von der Stärke der Schlackeschicht 5. Ein Durchmesser von etwa 1 bis 4 mm und eine Anzahl von 2 bis 6 Öffnungen 17 (auch mehr können möglich sein) erbringt eine gute Kühlleistung. Die Pfeile in Fig. 3 bezeichnen die Strömungsrichtung des Kühlmittels.

Der Stopfen 13 aus Stahl weist im Inneren der Führungseinrichtung 9 ein Umlenkelement 16 aus Stahl auf, mit dessen Hilfe der aus dem Rohr 14 austretende Kühlmittelstrom umgeleitet und in den Zwischenraum zwischen dem Rohr 14 und der Wand 9 des Kühlraumes geleitet wird.Stopfen 13 ist an die Führungseinrichtung 9 angeschweißt. Das Umlenkelement 16 fixiert gleichzeitig das Führungsrohr 12 und bildet eine gasdichte Verbindung zwischen dem Führungsrohr 12 und dem Stopfen 13, um das Eindringen von Wasser in das Führungsrohr 12 zu verhindem. Das Material des Umlenkelements 16 ist hitzebeständig gegenüber den Temperaturen der Stahlschmelze, es ist am Eintauchende mit einer kleinen Öffnung zur Durchführung der optischen Faser versehen.

## Patentansprüche

1. Führungseinrichtung für Signalleitungen mit einem Führungsrohr (12), durch das die Signalleitungen geführt sind, mit einer das Führungsrohr (12) seitlich umgebenden Kühleinrichtung mit mindestens einem Raum für ein Kühlmedium und mit mindestens einem Zulauf (10) und mindestens einem Ablauf (11) für das Kühlmedium, wobei der Raum für das Kühlmedium rohrförmig ausgebildet und an mindestens einer Stimseite mit einem Verschluß (13) gasdicht verschlossen ist.

2. Führungseinrichtung nach Anspruch 1, **dadurch gekennzeichnet, dass** das Führungsrohr (12) durch den Verschluss (13) der Stirnseite hindurchgeführt ist.

3. Führungseinrichtung nach Anspruch 1, **dadurch gekennzeichnet, dass** das Führungsrohr (12) in dem Verschluß (13) oder in dem Raum für das Kühlmedium endet und dass die Signalleitungen durch den Verschluß (13) geführt sind.

4. Führungseinrichtung nach einem der Ansprüche 1 bis 3, **dadurch gekennzeichnet, dass** in dem rohrförmigen Raum ein weiteres, vorzugsweise als Stahlrohr ausgebildetes Rohr (14) um das Führungsrohr (12) herum angeordnet ist, wobei der Zulauf (10) in dem weiteren Rohr (14) und der Ablauf (11) in der Wand des rohrförmigen Raums angeordnet ist.

5. Führungseinrichtung nach Anspruch 4, **dadurch gekennzeichnet, dass** das dem einen verschlossenen Ende des rohrförmigen Raums zugewandte Ende des weiteren Rohrs (14) mindestens eine Öffnung aufweist.

6. Führungseinrichtung nach Anspruch 4, **dadurch gekennzeichnet, dass** das weitere Rohr (14) an seinem Mantel mindestens eine Öffnung aufweist.

7. Führungseinrichtung nach Anspruch 6, **dadurch gekennzeichnet, dass** das weitere Rohr (14) mehrere Öffnungen (17) aufweist, die vorzugsweise gleichmäßig in Umfangsrichtung und/oder in Längsrichtung des weiteren Rohrs (14) verteilt sind.

8. Führungseinrichtung nach einem der Ansprüche 1 bis 7, **dadurch gekennzeichnet, dass** in dem Raum für das Kühlmedium ein Gemisch aus Luft und Wasser und/oder Wasserdampf angeordnet ist.

9. Führungseinrichtung nach einem der Ansprüche 1 bis 8, **dadurch gekennzeichnet, dass** die Signalleitungen als elektrische Leitungen oder als optische Fasern ausgebildet sind.

10. Vorrichtung zum Messen von Temperaturen und/oder Konzentrationen mit einem Messende, **dadurch gekennzeichnet, dass** an dem Messende der Vorrichtung eine Führungseinrichtung (9) nach einem der Ansprüche 1 bis 9 angeordnet ist.

11. Vorrichtung nach Anspruch 10, **dadurch gekennzeichnet, dass** an dem Messende oder dem verschlossenen Ende der Führungseinrichtung (9) ein Thermoelement, eine elektrochemische Messzelle und/oder ein Ende einer optischen Faser angeordnet ist.

12. Verwendung der Vorrichtung nach Anspruch 10 oder 11 zur Messung von Temperaturen und/oder Konzentrationen in Metallschmelzen, insbesondere in Eisen-, Gusseisen- oder Stahlschmelzen.

13. Verwendung nach Anspruch 12 als Eintauchsensor (1).

14. Verwendung von Wasserdampf und/oder eines Gemisches aus Luft und Wasser als Kohlmittel in einer Führungseinrichtung (9) nach einem der Ansprüche 1 bis 9.
